# EUROPÄISCHE PATENTSCHRIFT

(11) **EP 1 401 954 B1**
(45) Veröffentlichungstag und Bekanntmachung des Hinweises auf die Patenterteilung: **21.09.2005**
(21) Anmeldenummer: 02745381.0
(22) Anmeldetag: 13.06.2002
(51) Int. Cl.: C08L 59/02, C08K 5/09

(54) **DIESELKRAFTSTOFFBESTÄNDIGE FORMTEILE**
MOULDED PARTS WHICH ARE RESISTANT TO DIESEL FUEL
PIECES MOULEES RESISTANTES AU CARBURANT DIESEL

(30) Priorität: 21.06.2001 DE 10129535
(43) Veröffentlichungstag der Anmeldung: 31.03.2004
(73) Patentinhaber: BASF Aktiengesellschaft, 67056 Ludwigshafen (DE)
(72) Erfinder: SAUERER, Wolfgang, 67134 Birkenheide (DE); DAMES, Burkhardt, 64646 Heppenheim (DE)
(86) Internationale Anmeldenummer: PCT/EP2002/006483
(87) Internationale Veröffentlichungsnummer: WO 2003/000795

(56) Entgegenhaltungen:
- EP-A- 0 001 075
- EP-A- 0 853 098
- EP-A- 1 057 868
- PATENT ABSTRACTS OF JAPAN vol. 1999, no. 12, 29. Oktober 1999 (1999-10-29) & JP 11 181232 A (POLYPLASTICS CO), 6. Juli 1999 (1999-07-06) in der Anmeldung erwähnt

## Beschreibung

Die Erfindung betrifft die Verwendung mindestens eines Zinkcarboxylates B) zur Erhöhung der Dieselkraftstoffbeständigkeit von Formteilen aus Polyoxymethylenen A).

Weiterhin betrifft die Erfindung die gemäß der erfindungsgemäßen Verwendung erhältlichen Formteile.

Polyacetale weisen aufgrund ihrer hohen Kristallinität eine gute Beständigkeit gegen zahlreiche Chemikalien auf, wobei die hohe Beständigkeit gegen Kraftstoffe (einschließlich den methanolhaltigen), Fette, Öle, Brems- und Kühlflüssigkeiten besonders hervorgehoben wird. Polyacetal zeigt nur eine geringe Quellung und demzufolge eine hohe Dimensionsstabilität. Die gute Verarbeitungsschwindung von Polyacetal (im Vergleich zu anderen technischen Thermoplasten) wird bei der Herstellung von Staugehäusen (Kraftstoffentnahmeeinrichtung) genutzt, da die in diese Anwendung integrierten Steckerverbindungen eine hohe Dichtigkeit aufweisen müssen. Gleichzeitig ist eine hohe Bruchdehnung des für das Staugehäuse verwendeten Materials notwendig, um die vom Gesetz geforderten Crashanforderungen zu erfüllen. Auch hierfür ist Polyacetal der Werkstoff der Wahl sowie für die gewünschte hohe Wärmeformbeständigkeit im Bereich der Kraftstoffhin- und Rückführungssysteme.

Diese guten Eigenschaften von Polyacetalen beziehen sich jedoch nur auf Temperaturen bis zu 60°C.

Aufgrund der Tendenz im Automobilsektor immer leistungsfähigere und gleichzeitig sparsamere Motoren zu entwickeln, sind speziell im Bereich der Dieselfahrzeuge unerwartete Schwierigkeiten aufgetreten. Um eine optimale Verbrennung des Dieselkraftstoffes zu erreichen, wird der Dieselkraftstoff bei Drücken um 1300 bar zerstäubt. Anschließend erfolgt eine abrupte Entspannung auf 0 bar. Bei diesem Vorgang im sogenannten common rail system können kurzzeitig Temperaturen bis 160°C im Motorraum auftreten. Dies hat zur Folge, daß sich alle mit dem Dieselkraftstoff im Berührung kommenden Teile entsprechend stark aufheizen und durch Mischung von kaltem Kraftstoff aus dem Tank und heißem Kraftstoff aus dem Motorbereich im Kraftstoffhin- und Rückführungssystem Temperaturen um 90°C auftreten. Selbst im Tankbereich können noch Temperaturen über 90°C auftreten, da vom Kraftstoffgebersystem überschüssiger, noch heißer Dieselkraftstoff in den Tank zurückgeführt wird. Unter diesen Bedingungen zersetzt sich Polyacetal und schlägt sich in den Leitungen nieder, so daß diese zum einen brüchig und zum anderen undurchlässig für den Dieselkraftstoff werden.

Darüber hinaus enthalten Dieselkraftstoffe Schwefel bzw. Schwefelverbindungen, welche die POM-Matrix zusätzlich schädigen, da insbesondere unter Lufttzufuhr saure Schwefelverbindungen entstehen, welche das Polymer abbauen.

Derartige Schwefelverbindungen finden sich ebenso in KFZ-Teilen, welche vulkanisierte Elastomere enthalten oder von solchen umhüllt werden (z.B. Lagerelemente im Betriebs- und Lenkungsbereich, welche aus Staubschutzgründen Elastomermanschetten aufweisen).

Sterisch gehinderte Amine (HALS-Verbindungen) gegebenenfalls mit Benzotriolderivaten werden üblicherweise zur Erhöhung der UV-Stabilität in POM-Massen eingesetzt, wobei diese je nach Anwendung mit anderen UV-Stabilisatoren kombiniert werden können: siehe z.B. EP-A 448 038, EP-A 171 941, EP-A 586 988, DE-A 33 15 115 und DE-A 44 04 081.

Aus der EP-A 855 424 ist die Verwendung von sterisch gehinderten Aminen zur Erhöhung der Dieselkraftstoffbeständigkeit bekannt. In den jüngeren Anmeldungen DE-A 10030553, DE-A 10030635 und DE-A 10030632 werden für diesen Zweck Polyethylenimine vorgeschlagen.

Der Zusatz von Zinkverbindungen zu Polyoxymethylenen ist u.a. aus der DE-A 19925491, JP-A 11/181232, JP-A 07/150004 und JP-A 07/150005 bekannt.

Aufgabe der vorliegenden Erfindung war es daher, Formteile aus Polyacetalen zur Verfügung zu stellen, welche bei hohen Dauergebrauchstemperaturen eingesetzt werden können und gegenüber Dieselkraftstoffen oder vulkanisierten Elastomeren beständig sind, wobei die guten oben genannten Gebrauchseigenschaften weitestgehend erhalten bleiben sollen.

Demgemäß wurde die eingangs definierte Verwendung von Zinkcarboxylaten gefunden. Bevorzugte Ausführungsformen sind den Unteransprüchen zu entnehmen.

Als Komponente A) enthalten die erfindungsgemäß verwendbaren Formmassen 10 bis 99,99 vorzugsweise 30 bis 99 Gew.-% und insbesondere 90 bis 99 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 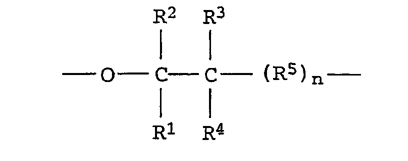 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 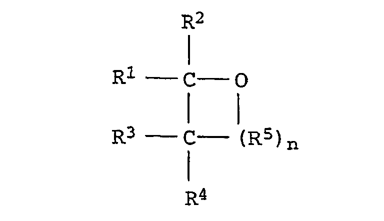 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 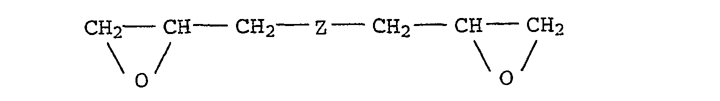 und/oder 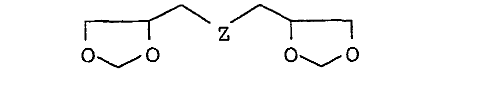 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 250000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente A) können insbesondere auch Produkte eingesetzt werden, die noch einen relativ hohen Anteil (im allg.
> 0,1 Gew.-%) an thermisch instabilen Anteilen enthalten. Die Komponenten C) und D) insbesondere, wenn sie vor der Mischung mit dem Polyoxymethylen vorgemischt werden, stabilisieren derartige Roh-Polyoxymethylene sehr gut.

Als Komponente B) enthalten die erfindungsgemäß verwendbaren Formmassen 0,01 bis 5, vorzugsweise 0,1 bis 4 und insbesondere 0,1 bis 3 Gew.-%, bezogen auf die Komponenten A) bis D) mindestens eines Zinkcarboxylates. (Die Summe der Gewichtsprozente der Komponenten A) bis D) ergibt stets 100 %).

Vorzugsweise weist der Carbonsäurerest 2 bis 44 C-Atome, insbesondere 3 bis 40 C-Atome auf. Bevorzugte Carbonsäurereste sind Fettsäurereste. Unter Fettsäuren versteht man nach Morrison/Boyd Lehrbuch der org. Chemie S. 1138, 3. Ausgabe, 1973, Verlag Chemie GmbH meist geradkettige Verbindungen, die vorzugsweise drei bis achtzehn C-Atome enthalten können. Außer den Verbindungen mit 3 und 5 C-Atomen können in der Regel nur Säuren, die eine gerade Anzahl von Kohlenstoffen enthalten in nennenswerten Mengen vor.

Als bevorzugte Säuren seien Montansäure (Mischung von Fettsäuren mit 30 bis 40 C-Atomen),

| | |
|---|---|
| Propionsäure | CH₃CH₂COOH |
| Buttersäure | CH₃(CH₂)₂COOH |
| Valeriansäure | CH₃(CH₂)₃COOH |
| Capronsäure | CH₃(CH₂)₄COOH |
| Caprylsäure | CH₃(CH₂)₆COOH |
| Caprinsäure | CH₃(CH₂)₈COOH |
| Laurinsäure | CH₃(CH₂)₁₀COOH |
| Myristinsäure | CH₃(CH₂)₁₂COOH |
| Palmitinsäure | CH₃(CH₂)₁₄COOH |
| Stearinsäure | CH₃(CH₂)₁₆COOH |
| Ölsäure | cis-9-Octadecadiensäure |
| Linolsäure | cis-cis-9,12-Octadecadiensäure |
| Linolensäure | cis,cis,cis-9,12,15-Octadecatriensäure |

sowie Pelargonsäure, Margarinsäure, Behensäure, Dodecandisäure genannt.

Als besonders bevorzugte Zinkcarboxylate seien Zinkstearat, Zinkoleat und Zinkmontanat, Zinkpalmitat, Zinkbehenat, Zinkcitrat, Zinkpropionat, Zinkoxalat, Zinksuccinat, Zinkacetat oder deren Mischungen genannt. Als weiteres bevorzugtes Zinkcarboxylat sei ein durch doppelte Umsetzung erzeugtes dibasisches Zinkstearat genannt, welches als Zinkseife BII der Firma Bärlocher im Handel erhältlich ist. Mehrbasige Carboxylate können ebenso eingesetzt werden. Es versteht sich von selbst, daß auch Mischungen vorstehender Carboxylate eingesetzt werden können.

Als Komponente C) können die erfindungsgemäß verwendbaren Formmassen 0 bis 5, vorzugsweise 0,01 bis 4 und insbesondere 0,1 bis 3 Gew.-% einer von B) verschiedenen Zinkverbindung einhalten. Geeignete Zinkverbindungen sind
Zinkacetylacetonat
Zinkhalogenide
Zinkcarbonat
Zinkhexafluorosilikat
Zinkhydroxid
Zinkhydroxidcarbonat
Zinknitrat
Zinkoxid
Zinksulfat
Zinksulfid
Zinktetrafluoroborat
Zinktitanat (Zn TiO₃)
wobei Zinkoxid und Zinksulfid besonders bevorzugt sind. Verfahren zur Herstellung sind dem Fachmann bekannt, so daß sich weitere Einzelheiten hierzu erübrigen.

Als Komponente D) können die erfindungsgemäßen Formmassen 0 bis 70, vorzugsweise 0 bis 30 Gew.-% weiterer Zusatzstoffe enthalten.

Als sterisch gehinderte Phenole D) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 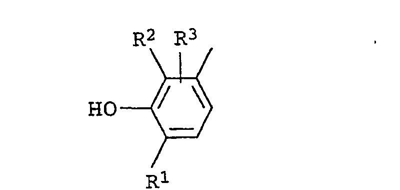 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 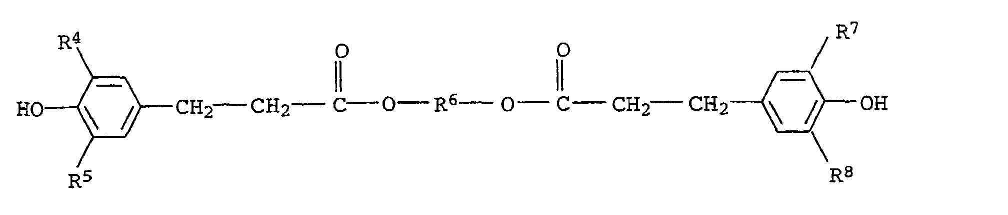 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formen entsprechen, sind 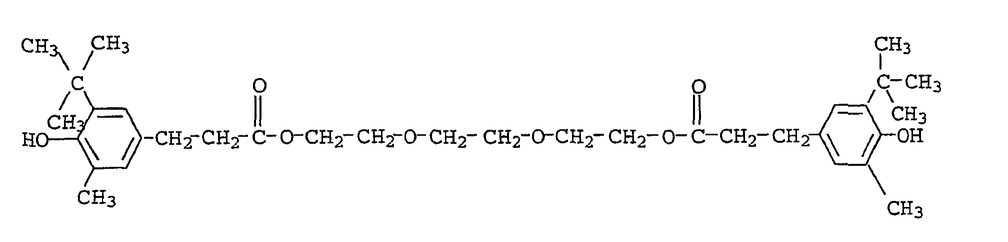 (Irganox® 245 der Firma Ciba-Geigy) 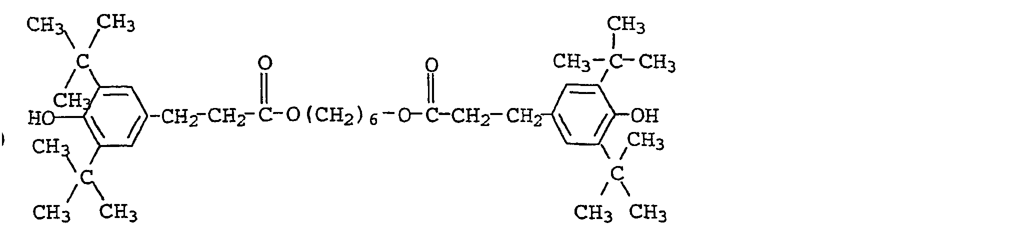 (Irganox® 259 der Firma Ciba-Geigy)

Beispielhaft genannt seien insgesamt als sterisch gehinderte Phenole:
2,2'-Methylen-bis-(4-methyl-6-tert.-butylphenol), 1,6-Hexandiolbis [3-(3,5-di-tert.-butyl-4-hydroxyphenyl)-propionat], Pentaerythril-tetrakis-[3-(3,5-di-tert.-butyl-4-hydroxyphenyl)-propionat], Distraryl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (D), die einzeln oder als Gemische eingesetzt werden können, sind üblicherweise in einer Menge bis zu 2 Gew.-%, vorzugsweise von 0,005 bis 2 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten D) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt bis zu 2 Gew.-%, vorzugsweise 0,005 bis 1,99 Gew.-%, bevorzugt 0,01 bis 0,08 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als weitere Stabilisatoren können die erfindungsgemäßen Polyoximethylen-Formmassen bis zu 2,0 Gew.-%, vorzugsweise 0,005 bis 0,5 Gew.-% und insbesondere 0,01 bis 0,3 Gew.-%, bezogen auf das Gesamtgewicht der Formmassen eines oder mehrerer Erdalkalisilikate und/oder Erdalkaliglycerophosphate enthalten. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

Me · x SiO₂ · n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Die Verbindungen werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Vorzugsweise Anwendung finden Calcium- und Magnesiumsilikate und/oder Calcium- und Magnesiumglycerophosphate. Diese können beispielsweise durch die folgenden Kenndaten näher spezifiziert werden:
Calcium- bzw.- Magnesiumsilikat:
   Gehalt an CaO bzw. MgO: 4 bis 32 Gew.-%, vorzugsweise 8 bis 30
   Gew.-% und insbesondere 12 bis 25 Gew.-%,
   Verhältnis SiO₂ : CaO bzw. SiO₂ : MgO (mol/mol) : 1,4 bis 10, vorzugsweise 1,4 bis 6 und insbesondere 1,5 bis 4,
   Schüttgewicht: 10 bis 80 g/100 ml, vorzugsweise 10 bis 40g/100 ml und durchschnittliche Kenngröße: kleiner als 100 µm, vorzugsweise kleiner als 50 µm und
Calcium- bzw. Magnesiumglycerophosphate:
   Gehalt an CaO bzw. MgO: größer als 70 Gew.-%, vorzugsweise größer als 80 Gew.-%
   Glührückstand: 45 bis 65 Gew.-%
   Schmelzpunkt: größer als 300°C und
   durchschnittliche Korngröße: kleiner als 100 µm, vorzugsweise kleiner als 50 µm.

Als bevorzugte Schmiermittel D) können die erfindungsgemäßen Formmassen bis zu 5, vorzugsweise 0,09 bis 2 und insbesondere 0,1 bis 0,7 mindestens eines Esters oder Amids gesättigter oder ungesättigter aliphatischer Carbonsäuren mit 10 bis 40 C-Atomen bevorzugt 16 bis 22 C-Atomen mit Polyolen oder aliphatischen gesättigten Alkoholen oder Aminen mit 2 bis 40 C-Atomen bevorzugt 2 bis 6 C-Atomen oder einem Ether, der sich von Alkoholen und Ethylenoxid ableitet, enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiterhin geeignet sind Polyetherpolyole oder Polyesterpolyole, welche mit ein- oder mehrwertigen Carbonsäuren, vorzugsweise Fettsäuren verestert bzw. verethert sind. Geeignete Produkte sind im Handel beispielsweise als Loxiol® EP 728 der Firma Henkel KGaA erhältlich.

Bevorzugte Ether, welche sich von Alkoholen und Ethylenoxid ableiten, weisen die allgemeine Formel

RO (CH₂ CH₂ O)ₙ H

auf, in der R eine Alkylgruppe mit 6 bis 40 Kohlenstoffatomen und n eine ganze Zahl größer/gleich 1 bedeutet.
Insbesondere bevorzugt für R ist ein gesättigter C₁₆ bis C₁₈ Fettalkohol mit n ≈ 50, welcher als Lutensol® AT 50 der Firma BASF im Handel erhältlich ist.

Die erfindungsgemäßen Formmassen können 0 bis 5, bevorzugt 0,001 bis 5 Gew.-%, vorzugsweise 0,01 bis 3 Gew.-% und insbesondere 0,05 bis 1 Gew.-% eines Melamin-Formaldehyd-Kondensates enthalten. Vorzugsweise ist dieses ein Fällungskondensat in feinteiliger Form, welches vernetzt und wasserunlöslich ist. Das Molverhältnis Formaldehyd zu Melamin beträgt vorzugsweise 1,2:1 bis 10:1, insbesondere 1,2:1 bis 2:1. Aufbau und Verfahren zur Herstellung derartiger Kondensate sind der DE-A 25 40 207 zu entnehmen.

Als Komponente D) können die erfindungsgemäßen Formmassen 0,0001 bis 1 Gew.-%, vorzugsweise 0,001 bis 0,8 Gew.-% und insbesondere 0,01 bis 0,3 Gew.-% eines Nukleierungsmittels enthalten.

Als Nukleierungsmittel kommen alle bekannten Verbindungen in Frage, beispielsweise Melamincyanurat, Borverbindungen wie Bornitrid, Kieselsäure, Pigmente wie z.B. Heliogenblau® (Kupferphtalocyaninpigment; eingetragenes Warenzeichen der BASF Aktiengesellschaft) oder verzweigte Polyoxymethylene, welche in diesen geringen Mengen eine nukleierende Wirkung zeigen.

Insbesondere wird als Nukleierungsmittel Talkum verwendet, welches ein hydratisiertes Magnesiumsilikat der Zusammensetzung Mg₃[(OH)₂/Si₄O₁₀] oder MgO · 4 SiO₂ · H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na, und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse bestimmt und beträgt vorzugsweise:
< 20 µm 100 Gew.-%
< 10 µm 99 Gew.-%
< 5 µm 85 Gew.-%
< 3 µm 60 Gew.-%
< 2 µm 43 Gew.-%

Derartige Produkte sind im Handel als Micro-Talc I.T. extra (Fa. Norwegian Talc Minerals) erhältlich.

Als Füllstoffe in Mengen bis zu 50 Gew.-%, vorzugsweise 5 bis 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Calciumcarbonat oder Glaskugeln, vorzugsweise in gemahlener Form oder Mischungen dieser Füllstoffe.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 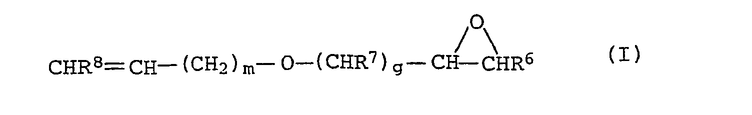 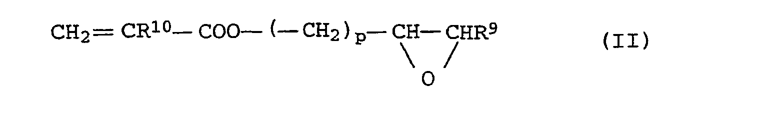 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird u.a. durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 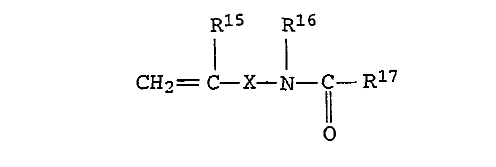 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

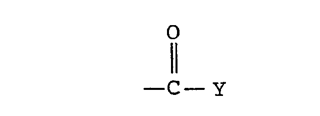

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat, Butandioldiacrylat und Dihydrodicyclo- pentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomeren; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Als weitere geeignete Elastomere seien thermoplastische Polyurethane genannt, wie sie beispielsweise in der EP-A 115 846 und EP-A 115 847 sowie EP-A 117 664 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Haftvermittler und Pigmente genannt. Der Anteil solcher Zusätze liegt im allgemeinen im Bereich von 0,001 bis 5 Gew.-%.

Als Komponente D) können die erfindungsgemäßen Formmassen bezogen auf das Gesamtgewicht der Komponenten A) bis D) 0 bis 2, vorzugsweise 10 ppm bis 1,5 und insbesondere 0,001 bis 1 Gew.-% einer Alkali- und/oder Erdalkaliverbindung enthalten.

Es können allgemein alle Erdalkali- und/oder Alkalimetallkationen verwendet werden, wobei Lithium-, Natrium-, Kalium- und Calcium-Kationen bevorzugt sind.

Unter Alkali- und/oder Erdalkaliverbindungen sollen erfindungsgemäß solche anorganischen oder organischen Salze verstanden werden, welche in wäßriger Lösung oder Suspensionen alkalisch reagieren.

Als anorganische Salze seien beispielsweise Carbonate, Hydrogencarbonate, Hydroxide, Oxide oder Phosphate genannt, wobei Alkalicarbonate wie Kaliumcarbonat und Natriumcarbonat besonders bevorzugt sind.

Organische Salze sind z.B. Alkoholate von C₂-bis C₁₂ Alkoholen, Phenolate oder Salze von Carbonsäuren mit 2 bis 12 C-Atomen, wobei Citrate, Oxalate oder Tartrate besonders bevorzugt sind.

Besonders bevorzugt sind Alkalihydroxide, insbesondere Kaliumhydroxid und Natriumhydroxid, welche vorzugsweise in Form einer wäßrigen 10 bis 70 %igen Lösung, vorzugsweise 40 bis 60 %ig bei der Herstellung der POM-Formmassen zugegeben werden, wobei die Dosierung gemeinsam mit dem Ruß erfolgen kann.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die Komponente B) sowie gegebenenfalls die Komponente(n) C) und D) können in einer bevorzugten Herstellungsform vorzugsweise bei Raumtemperaturen auf das Granulat von A) aufgebracht und anschließend extrudiert werden.

In einer weiteren bevorzugten Ausführungsform erfolgt die Zugabe von B) in die Thermoplastschmelze A) mittels einer Lösung bzw. Dispersion und/oder Emulsion, vorzugsweise wässriger Lösung. Diese weist üblicherweise einen Feststoffgehalt von 0,005 bis 5 bevorzugt von 0,1 bis 1 % auf.

Die erfindungsgemäß verwendbaren thermoplastischen Formmassen zeichnen sich durch ein ausgewogenes Eigenschaftsspektrum. Daraus hergestellte Formteile sind für hohe Dauergebrauchstemperaturen geeignet und dieselkraftstoffbeständig. Daher eignen sich derartige Formteile insbesondere zur Anwendung als Formkörper im Dieselkraftstoffmotor bzw. -motorraum und als Lagerelemente im KFz-Antriebs- und Lenkungsbereich.

### Beispiele

Es wurden folgende Komponenten eingesetzt:

### Komponente A)

Polyoxymethylencopolymerisat aus 98,8 Gew.-% Trioxan und 1,2 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer eine Schmelzvolumenrate von 11 cm³/10 min. (190°C, 2,16 kg Auflagegewicht nach ISO 1133).

### Komponenten B)

### Komponente B/1

Zinkstearat (Liga 101 der Firma Peter Greven Fett-Chemie.)

### Komponente B/2

Zinkseife B II der Firma Baerlocher. Nach Herstellerangaben handelt es sich um durch doppelte Umsetzung erzeugtes dibasisches Zinkstearat.

### Komponente C

### ZnO (Zinkweiß indirekt der Firma Wihart)

### Komponente D

### D/1: Irganox® 245 der Firma Ciba-Geigy:

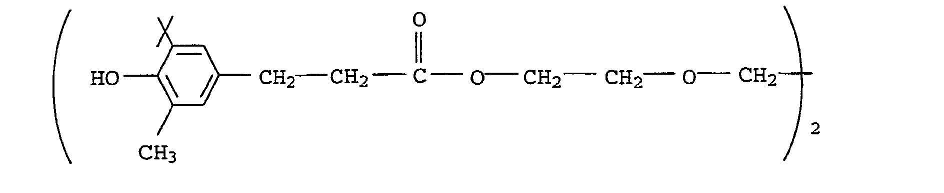

### D/2:

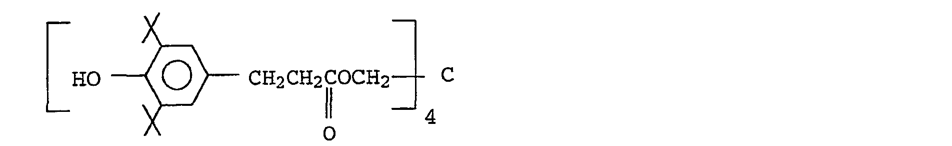

Irganox® 1010 (Ciba Geigy)

### D/3

Polyamid-Oligomeres mit einem Molekulargewicht von etwa 3000, hergestellt aus Caprolactam, Hexamethylendiamin, Adipinsäure und Propionsäure (als Molekulargewichtsregler) nach Bsp. 5-4 der US-A 3 960 984 ("PA-dicapped")

### D/4

Synthetisches Mg-Silicat (Ambosol® der Firma Société Nobel, Bozel, Puteaux) mit folgenden Eigenschaften:

| | |
|---|---|
| Gehalt an MgO: | ≥ 14,8 Gew.-% |
| Gehalt an SiO₂: | > 59 Gew.-% |
| Verhältnis SiO₂ : MgO | 2,7 mol/mol |
| Schüttdichte: | 20 bis 30 g/100 ml |
| Glühverlust: | < 25 Gew.-% |

### D/5

Ein Melamin-formaldehyd-Kondensat gemäß Beispiel 1 der DE-A 25 40 207 eingesetzt.

### D/6 Glycerindistearat (Loxiol® P 1206 der Firma Cognis).

Jede POM-Mischung enthielt als Verarbeitungshilfsmittel 0.35 Gew.-% Komponente D/1, 0.1 Gew.-% Komponenten D/2, 0.04 Gew.-% Komponente D/3, 0.05 Gew.-% Komponente D/4, 0.20 Gew.-% Komponente D/5 und 0.15 % Komponente D/6.

Zur Herstellung der Mischungen wurde Komponente A mit den in Tabelle 1 angegebenen Mengen der Komponenten B/1 bzw. B/2 und den vorstehend beschriebenen Mengen der Komponenten D/1, D/2, D/3, D/4, D/5 und D/6 gemischt und in einem Zweischneckenextruder bei 220°C compoundiert, entgast und als Strang ausgepresst sowie granuliert. Anschließend wurden bei 190°C spritzgegossene Probekörper hergestellt.

Die Beständigkeit von Polyacetal-Werkstoffen gegen heißen Dieselkraftstoff wurde im Labor anhand der Änderung der Masse unter Verwendung standardisierter Probekörper ermittelt. Zur Erzielung höherer Praxisnähe und kürzerer Prüfzeiten wurden 1 mm dicke Probekörper verwendet, wie sie durch Verkleinerung der in ISO 527 vorgehenen 4 mm dicken Probekörper des Typs 1A um den Faktor 4 erhalten werden (im folgenden kurz als "Viertel-ISO-Stäbe" bezeichnet).

Die Resultate der Lagerung der Polyacetal-Probekörpern in heißem Dieselkraftstoff hängen von einer Vielzahl von Parametern ab, insbesondere von folgenden:
- Lagertemperatur
- Probekörpergeometrie
- Verhältnis Probekörperanzahl/Dieselkraftstoffvolumen
- Art des Dieskraftstoffs (selbst bei standardisierten Referenzkraftstoffen sind häufig erhebliche Schwankungen der Ergebnisse von Batch zu Batch zu beobachten)
- Häufigkeit des Dieselkraftstoffwechsels
- Luft- bzw. Sauerstoffzufuhr.

Es hat sich gezeigt, daß zur Erlangung aussagefähiger, verwertbarer Ergebnisse die Mitlagerung von Probekörpern aus POM-Referenzwerkstoffen mit bekannter Performance unbedingt erforderlich ist. Als POM-Referenzwerkstoff wurde Ultraform® S 1320 003 eingesetzt, das seit Jahren erfolgreich im Tankbereich eingesetzt wird.

Für die nachstehenden Beispiele und Vergleichsbeispiele wurden der folgende Aufbau und die folgenden Randbedingungen gewählt:
- Autoklav, aus V2A-Edelstahl gefertigt, Volumen 3 Liter, zur Hälfte mit dem Referenzkraftstoff CEC-RF 90-A-92 der Fa. Haltermann, Hamburg, gefüllt
- pro Autoklav 60 spitzgegossene Viertel-ISO-Stäbe (je 15 aus einer bestimmten Charge von Ultraform S1320 003 ungefärbt und drei weiteren Werkstoff-Formulierungen)
- Lagertemperatur 100°C
- kein Kraftstoffwechsel
- Beobachtung der Massenänderung durch Wiegen von jeweils 5 Probekörpern aller im Autoklaven befindlichen Werkstoff-Formulierungen bei Raumtemperatur; die Probekörper wurden nach der Entnahme aus dem Autoklaven mit saugfähigem Papier vorsichtig von anhaftenden Kraftstoffresten befreit und auf Raumtemperatur abgekühlt
- zu dem Zeitpunkt, zu dem die aus dem Referenzwerkstoff gefertigten Probekörper 40 % ihrer Ausgangsmasse verloren haben, wurde ebenfalls der Massenverlust für die anderen im Autoklaven befindlichen Werkstoff-Formuierungen ermittelt; der Quotient Massenverlust Referenzwerkstoff/Massenverlust Werkstoff-Formulierung zu diesem Zeitpunkt ergab den Werkstoff-Kennwert k1.

Gilt k1 > 1, so wurde die Beständigkeit des Referenzwerkstoffs übertroffen. Je höher k1, desto besser die Beständigkeit.

Die Zusammensetzungen der Formmassen und die Ergebnisse der Messungen sind der Tabelle zu entnehmen.

| Beispiel | B/1 [Gew.-%] | B/2 [Gew.-%] | C [Gew.-%] | k1 |
|---|---|---|---|---|
| 1 | 1 | - | - | 3,2 |
| 2 | 2 | - | - | 9,3 |
| 3 | - | 1 | - | 4,2 |
| 4 | - | 2 | - | 8,4 |
| 5 | 0, 5 | - | 1 | 14 |
| 6 | 1 | - | 1 | 19 |

## Patentansprüche

1. Verwendung mindestens eines Zinkcarboxylates B) zur Erhöhung der Dieselkraftstoffbeständigkeit von Formteilen aus Polyoxymethylenen A).

2. Verwendung nach Anspruch 1, wobei der Carbonsäurerest der Komponente B) 2 bis 44 C-Atome aufweist.

3. Verwendung nach den Ansprüchen 1 oder 2, wobei die Komponente B) aus Zinkstearat, Zinkoleat, Zinkmontanat, Zinkpalmitat, Zinkbehenat, Zinkcitrat, Zinkpropionat, Zinkoxalat, Zinksuccinat, Zinkacetat oder deren Mischungen aufgebaut ist.

4. Verwendung nach den Ansprüchen 1 bis 3, wobei die Polyoxymethylene weitere Zinkverbindungen C), verschieden von B), in Mengen bis zu 5 Gew.-% enthalten können.

5. Verwendung nach den Ansprüchen 1 bis 4, wobei die Polyoxymethylene A) noch 0 bis 70 Gew.-%, bezogen auf die Formmassen aus A) bis D), weiterer Zusatzstoffe enthalten können.

6. Verwendung nach den Ansprüchen 1 bis 5, wobei die Menge der Komponente B) 0,01 bis 5 Gew.-%, bezogen auf A) bis D), beträgt.

7. Verwendung nach den Ansprüchen 1 bis 6, wobei die Menge der Komponente C) 0,01 bis 5 Gew.-%, bezogen auf A) bis D), beträgt.

## Claims

1. The use of at least one zinc carboxylate B) for increasing the diesel-fuel resistance of moldings made from polyoxymethylenes A).

2. The use as claimed in claim 1, where the carboxylic radical of component B) has from 2 to 44 carbon atoms.

3. The use as claimed in claim 1 or 2, where component B) is composed of zinc stearate, zinc oleate, zinc montanate, zinc palmitate, zinc behenate, zinc citrate, zinc propionate, zinc oxalate, zinc succinate, zinc acetate, or a mixture of these.

4. The use as claimed in any of claims 1 to 3, where the polyoxymethylenes may comprise up to 5% by weight of zinc compounds C) other than B).

5. The use as claimed in any of claims 1 to 4, where the polyoxymethylenes A) may also comprise from 0 to 70% by weight, based on the molding compositions made from A) to D), of other additives.

6. The use as claimed in any of claims 1 to 5, where the amount of component B) is from 0.01 to 5% by weight, based on A) to D).

7. The use as claimed in any of claims 1 to 6, where the amount of component C) is from 0.01 to 5% by weight, based on A) to D).

## Revendications

1. Utilisation d'au moins un carboxylate de zinc B) pour augmenter la résistance au carburant Diesel de pièces moulées en polyoxyméthylènes A).

2. Utilisation suivant la revendication 1, dans laquelle le radical d'acide carboxylique du composant B) présente 2 à 44 atomes de C.

3. Utilisation suivant la revendication 1 ou 2, dans laquelle le composant B) est constitué de stéarate de zinc, d'oléate de zinc, de montanate de zinc, de palmitate de zinc, de béhénate de zinc, de citrate de zinc, de propionate de zinc, d'oxalate de zinc, de succinate de zinc, d'acétate de zinc ou de leurs mélanges.

4. Utilisation suivant les revendications 1 à 3, dans laquelle les polyoxyméthylènes peuvent contenir d'autres composés de zinc C), différents de B), en des quantités allant jusqu'à 5% en poids.

5. Utilisation suivant les revendications 1 à 4, dans laquelle les polyoxyméthylènes A) peuvent encore contenir 0 à 70% en poids, par rapport aux masses de moulage à base de A) à D), d'autres additifs.

6. Utilisation suivant les revendications 1 à 5, dans laquelle la quantité du composant B) est de 0,01 à 5% en poids, par rapport à A) à D).

7. Utilisation suivant les revendications 1 à 6, dans laquelle la quantité du composant C) est de 0,01 à 5% en poids, par rapport à A) à D).
